# EUROPÄISCHE PATENTANMELDUNG

(11) **EP 2 719 664 A1**
(43) Veröffentlichungstag der Anmeldung: **16.04.2014**
(21) Anmeldenummer: 13187011.5
(22) Anmeldetag: 02.10.2013
(51) Int. Cl.: C01B 33/107

(54) **Verfahren zur Hydrierung von Siliciumtetrachlorid zu Trichlorsilan**

(30) Priorität: 15.10.2012 DE 102012218741
(71) Anmelder: Wacker Chemie AG, 81737 München (DE)
(72) Erfinder: Häckl, Dr. Walter, 84367 Zeilarn (DE); Ellinger, Norbert, 84389 Postmünster (DE); Hirschmann, Andreas, 94140 Ering (DE); Kahler, Markus, 84556 Kastl (DE); Pätzold, Dr. Uwe, 84489 Burghausen (DE)
(74) Vertreter: Killinger, Andreas

(57) **Zusammenfassung**

Gegenstand der Erfindung ist ein Verfahren zur Hydrierung von Siliciumtetrachlorid in einem Reaktor, bei dem Eduktgas bei einem Druck zwischen 4 und 15 bar, welches Wasserstoff und Siliciumtetrachlorid enthält, zunächst mittels mindestens einem Wärmetauscher aus Graphit und anschließend mittels mindestens einem Heizelement aus mit SiC beschichtetem Graphit auf eine Temperatur von größer als 900°C erwärmt wird und dabei die Temperatur der Heizelemente zwischen 1150°C und 1250°C beträgt, dadurch gekennzeichnet, dass das Eduktgas mindestens eine Borverbindung beinhaltet, ausgewählt aus der Gruppe bestehend aus Diboran, höhere Borane, Borhalogenverbindungen und Borsilylverbindungen, wobei die Summe der Konzentrationen aller Borverbindungen größer ist als 1 ppmv bezogen auf den Eduktgasstrom.

## Beschreibung

Die Erfindung betrifft ein Verfahren zur Hydrierung von Siliciumtetrachlorid (STC) in Trichlorsilan (TCS).

Die Herstellung von Trichlorsilan erfolgt üblicherweise in einem Wirbelbettverfahren aus metallurgischem Silicium und Chlorwasserstoff. Um hochreines Trichlorsilan zu erzeugen, erfolgt anschließend eine Destillation. Dabei fällt als Nebenprodukt auch Siliciumtetrachlorid an.

Die größte Menge an Siliciumtetrachlorid fällt bei der Abscheidung von polykristallinem Silicium an. Polykristallines Silicium wird beispielweise mittels des Siemens-Prozesses erzeugt. Dabei wird Silicium in einem Reaktor an erhitzten Dünnstäben abgeschieden. Als Prozessgas wird als Silicium enthaltende Komponente ein Halogensilan wie Trichlorsilan in Anwesenheit von Wasserstoff verwendet. Bei der Umsetzung von Trichlorsilan (Disproportionierung) in abgeschiedenes Silicium entstehen große Mengen an Siliciumtetrachlorid.

Aus Siliciumtetrachlorid kann beispielsweise durch Reaktion mit Wasserstoff und Sauerstoff bei hohen Temperaturen in Brennkammern hoch disperse Kieselsäure produziert werden.

Die wirtschaftlich interessanteste Verwendung von Siliciumtetrachlorid ist jedoch die Hydrierung zu Trichlorsilan. Diese erfolgt durch Reaktion von Siliciumtetrachlorid mit Wasserstoff in Trichlorsilan und Chlorwasserstoff. Dadurch ist es möglich, aus dem bei der Abscheidung entstehenden Nebenprodukt Siliciumtetrachlorid Trichlorsilan zu erzeugen und jenes Trichlorsilan wieder dem Abscheideprozess zuzuführen, um elementares Silicium zu erzeugen.

Die Hydrierung von Siliciumtetrachlorid mit Wasserstoff zu Trichlorsilan findet üblicherweise in einem Reaktor bei hohen Temperaturen statt, bei wenigstens 600°C, idealer weise bei wenigstens 850°C (Hochtemperaturkonvertierung).

Um die besagten hohen Temperaturen zu erreichen, sind Heizelemente nötig, die aus extrem hitzebeständigem Material gefertigt sind. Hierzu werden kohlestoffhaltige Materialien wie zum Beispiel Graphit verwendet. Wie im Folgenden gezeigt wird, stellen sich bei Hochtemperaturbehandlungen von Wasserstoff enthaltenden Gasen, die mittels kohlenstoffhaltigen Heizelementen erwärmt werden, besondere Probleme, auf die im Stand der Technik bereits aufmerksam gemacht wurde.

Zusätzlich zu den im Stand der Technik bereits beschriebenen Problemen ergibt sich eine neue Problematik, die vor allem dann zum Tragen kommt, wenn die Reaktoren einen verhältnismäßig langen Zeitraum in Betrieb sind. So konnte beobachtet werden, dass der elektrische Widerstand der Heizelemente mit zunehmender Zeit kontinuierlich steigt. Da die gewünschte gleichbleibende elektrische Leistung zur Verfügung gestellt werden soll, stellt diese Widerstandserhöhung zusätzliche technische Anforderungen an die Stromversorgung der Heizelemente. Vorteilhafter wäre es daher, die Erhöhung des Widerstandes der Heizelemente zu verhindern oder zumindest zu vermindern.

US 4,536,642 A offenbart eine Vorrichtung zur Hochtemperaturbehandlung von Gasen, bestehend aus einem wärmeisolierten Gehäuse mit Gaseinlass- und Gasauslassöffnungen sowie zwischen diesen Öffnungen angeordneten, durch direkten Stromdurchgang beheizten inerten Widerstandsheizelementen. Die Heizelemente bestehen aus Graphit. Zusätzlich kann eine Wärmeaustauschereinheit aus unbeheizten Gasableitungen in das Gehäuse eingepasst sein, da es aus Gründen der Energieeinsparung sinnvoll ist, die Edukte der Reaktion mit Hilfe der heißen Abgase des Reaktors zu erwärmen. Die heißen Abgase umfassen Produkte und nichtumgesetzte Edukte.

Eine solche Vorrichtung eignet sich insbesondere auch zur Hydrierung von STC zu TCS.

Wegen der erforderlichen hohen Temperaturstabilität werden die verwendeten Heizelemente aus einem geeigneten Material gefertigt. Graphit eignet sich aus Gründen der Temperaturstabilität theoretisch gut, jedoch reagiert der enthaltene Kohlenstoff mit dem einströmenden Wasserstoff bei den Temperaturen zu Methan.

In US 7,442,824 B2 wird beispielsweise vorgeschlagen, die die Oberfläche der Heizelemente vor der Hydrierung des Chlorsilans in-situ mit Siliciumkarbid zu beschichten und so eine Methanisierung dieser Bauteile zu verringern. Dieser Schritt der Beschichtung mit Siliciumkarbid findet bei einer Temperatur von mindestens 1000°C statt.

Dennoch ist auch bei beschichteten Graphitteilen stets noch eine Methanisierung und eine damit einhergehende Korrosion zu beobachten. Auch die Reaktion des H₂/STC-Gemisches mit dem enthaltenen Kohlenstoff der Heizelemente zu anderen Kohlenstoff enthaltenden Verbindungen wie Methyltrichlorsilan und Methyldichlorsilan verursacht strukturelle Defekte an den Heizelementen, welche zu Reaktorausfällen führen und so die Standzeit des Reaktors reduzieren.

Da die defekten Teile ersetzt werden müssen, bedeutet das zusätzlich einen erheblichen finanziellen Aufwand aufgrund der Neubeschaffung der erforderlichen Ersatzteile und des Montageaufwands.

Die Methanisierung erfolgt insbesondere an den Heizelementen, die in direktem Kontakt mit Wasserstoff und STC stehen.

Dies äußert sich durch das vermehrte Auftreten von Abplatzungen und Splittern, die auf den Reaktorboden fallen und dort im ungünstigsten Fall zum Beispiel zu Erdschlüssen und damit zum Ausfall der Heizelemente führen können.

US 7,998,428 B2 offenbart eine Vorrichtung, um Eduktgase Siliciumtetrachlorid und Wasserstoff einem Reaktionsraum zuzuführen, um ein Produktgas enthaltend Trichlorsilan und Chlorwasserstoff zu erzeugen. Die Vorrichtung sieht vor, Reaktionsraum und Heizelemente in einem Behälter zu lagern, dem Argon zugeführt wird. Reaktionsraum und Heizelemente befinden sich demzufolge in einem unter Druck stehenden Außenbehälter, der mit Argon beaufschlagt ist. So können auftretende Leckagen von Prozessgasen verhindert werden. Damit lässt sich auch bewerkstelligen, dass die Heizelemente nicht von Wasserstoff angegriffen werden.

Nachteilig ist jedoch, dass der Reaktionsraum und die Heizelemente voneinander getrennt sind und somit eine höhere Temperatur der Heizelemente erforderlich ist. Dies kann wiederum Schäden an der elektrischen Durchführung zur Folge haben.

Außerdem muss der Heizraum nach außen vermehrt isoliert werden, was den Durchmesser der Anlage vergrößert.

Eine aufwändige Druckregulierung ist ebenfalls nötig, damit Wasserstoff nicht in den Heizraum eindringen kann.

DE 199 49 936 A1 beschreibt ein Verfahren zum Schutz von Bauteilen aus Graphit- und Kohlenstoffmaterialien bei ihrem Einsatz in Wasserstoffatmosphären bei Temperaturen oberhalb 400 °C, gekennzeichnet dadurch, dass den Wasserstoffatmosphären in Abhängigkeit von der vorherrschenden Temperatur und vom Druck Methan im Verhältnis des stöchiometrischen Gleichgewichtes zwischen Wasserstoff und Methan beigemischt wird.

Obwohl prinzipiell zum Schutz der Heizelemente und Wärmetauscher geeignet, würde dieser zusätzliche Methan-Eintrag bei der Hydrierung von STC zu TCS allerdings zur vermehrten Bildung von unerwünschten Reaktionsprodukten (Methylchlorsilane und Kohlenwasserstoffe) führen, die einen erheblichen destillativen Aufwand zur Abtrennung aus den Chlorsilanen bedingen.

US 2011/0110839 A1 bezieht sich auf ein Verfahren zur Herstellung von TCS mittels Hydrochlorierung aus STC, metallurgischem Silicium und H₂, wobei das Produktgasgemisch enthaltend TCS, STC, H₂, Si und Metallsalzen in mehreren Schritten aufbereitet wird, um TCS und STC von den anderen Bestandteilen, insbesondere den Feststoffen zu trennen. Die Gasströme von den Heizelementen zum Reaktor können dabei enthalten Chlorwasserstoff, Dichlorsilan, TCS, STC und Verunreinigungen wie Phosphorchlorid, Phosphortrichlorid und Bortrichlorid, Diboran, Methan, Phosphin und Wasser. Die Temperatur des Gases beträgt dabei etwa 580 °C und der Druck beträgt 22.5 bar. Unter diesen Reaktionsbedingungen findet keine bzw. nur unwesentliche Methanisierung der Heizelemente statt. Erst bei höheren Temperaturen und niedereren Drücken tritt dieser Effekt auf. Das gesamte Verfahren ist aber dennoch ungeeignet, um bereits sehr sauberes STC, das beispielsweise aus der Abscheidung zurückgewonnen wird, zu TCS zu hydrochlorieren, da damit ein erheblicher und vermeidbarer Aufwand der Reinigung einhergeht.

US 6,932,954 B2 offenbart ein Verfahren umfassend Abscheidung von Polysilicium aus TCS und H₂, TCS-Herstellung durch Inkontaktbringen des Abgases der Abscheidung mit Rohsilicium, wobei Silicium mit im Abgas enthaltenen HC1 reagiert und Aufbereitung des Abgases der TCS-Herstellung zur Abtrennung von TCS, um TCS anschließend der Abscheidung zuzuführen. In den Rückständen des Aufbereitungsprozesses ist STC enthalten, welches mit H₂ zu TCS hydriert wird. Wasserstoff kann von den Chlorsilanen durch Abkühlung abgetrennt werden. Der abgetrennte Wasserstoff kann große Mengen an Borverbindungen enthalten. Diese Borverbindungen können durch Inkontaktbringen des Wasserstoffs mit Substanzen, die eine der funktionellen Gruppen -NR₂ (R Alkyl mit 1-10 C Atomen), -SO₃H, -COOH oder -OH enthalten, entfernt werden. Borverbindungen in den Chlorsilanen (Borhalogenide) können durch Destillation entfernt werden, um den Borgehalt im Silicium zu reduzieren und so Silicium mit den nötigen qualitativen Eigenschaften zu erzeugen.

Ähnlich wie bei US 2011/0110839 A1 findet der TCS Bildungsschritt unter Zuhilfenahme von Rohsilicium als Hydrochlorierung statt. Unter diesen Reaktionsbedingungen findet keine bzw. nur unwesentliche Methanisierung der Heizelemente statt. Der Materialstrom (H₂ und STC), der über die Heizelemente in den TCS Bildungsschritt gelangt, ist nicht mit Verunreinigungen wie Bor kontaminiert. Das Verfahren hat den Nachteil, dass der zunächst unkontaminierte Wasserstoff nach dem TCS Bildungschritt wieder aufwändig gereinigt werden muss, ehe er in der Abscheidung verwendet werden kann.

US 2009/060819 A1 offenbart ein Verfahren, bei dem Nebenproduktströme z.B. von Polyabscheidung und Destillation verarbeitet werden, indem insbesondere schmutziges STC, das STC und andere hochsiedende Verbindungen enthält, gereinigt, wodurch die hochsiedenden Verbindungen abgetrennt werden, und zu TCS hydriert wird. Das schmutzige STC wird bei der Reinigung von TCS (Destillation, Adsorption) erhalten. Da das Rohmaterial der TCS-Synthese metallurgisches Silicium ist, weisen die Nebenprodukte auch Verunreinigungen wie Kohlenstoff-, Bor- und Phosphorverbindungen auf. US 2009/060819 A1 sieht für die STC Hydrierung besonders sauberes STC (HP-STC) vor, das aus einer gesonderten Nebenproduktchlorierung und anschließender Reinigung hervorgeht. Der verwendete Wasserstoff für die STC Hydrierung stammt aus derselben Quelle wie der für die Abscheidung und ist damit besonders sauber, da sonst Verunreinigungen im Silicium die hohe Qualität des Produktes beeinträchtigen würden.

Dieses Verfahren löst nicht die Probleme, die bei der STC Hydrierung in Form von Methanisierung der Heizelemente entstehen.

US 3,455,745 A betrifft die Beschichtung von Objekten mit Tetraborsilizid (TBS), das als äußerst resistent gegen Oxidation bekannt ist. Bei Objekten aus Silicium werden Wasserstoff und Bortrichlorid oder Diboran dem in einem Reaktor befindlichen Objekt zugeführt, wodurch eine TBS-Schicht auf dem Objekt entsteht. Auch Objekte aus Bor können mit TBS beschichtet werden: dazu werden beispielsweise STC oder andere Halogensilane und Wasserstoff (oder TCS und H₂) zugeführt. In beiden Fällen, die anspruchsgemäß kombiniert werden, werden die Gase, also Wasserstoff, STC/TCS und Bortrichlorid/Diboran auf eine Temperatur von 1000-1200°C erwärmt. Auch Objekte, die nicht aus Silicium oder Bor bestehen, können mit TBS beschichtet werden. Dazu erfolgt zunächst eine Beschichtung des Objekts mit Bor oder mit Silicium. Dies erfolgt durch pyrolytische Zersetzung einer Bor- oder Siliciumverbindung. Beispielsweise wurde auf einen Stab aus Graphit durch Reduktion von TCS mit Wasserstoff eine Siliciumschicht aufgebracht. Auf diese Siliciumschicht kann mittels Wasserstoff und Bortrichlorid oder Diboran eine TBS-Schicht aufgebracht werden.

Nach US 3,455,745 A ist für das Beschichten mit TBS zumindest eine Schicht aus Silicium auf der Oberfläche des zu beschichtenden Objektes notwendig. Im Falle eines Objektes bestehend aus Graphit wird daher eine Beschichtung zuerst mittels pyrolytischer Zersetzung von Trichlorsilan bei einer Temperatur von 1150 °C vorgenommen, bevor mit der Beschichtung mit TBS begonnen wird.

Es hat sich jedoch herausgestellt, dass die auf diese Weise beschichteten Heizelemente den schon vorher beobachteten zeitlichen Verlauf des Widerstandes aufweisen, was dazu führt, dass erhöhte Anforderungen an Stromversorgung gestellt werden, was sich wiederum sehr ungünstig auf die Wirtschaftlichkeit des Verfahrens auswirkt.

Die Aufgabe der Erfindung bestand darin, ein Verfahren für die Hydrierung von STC zu TCS zur Verfügung zu stellen, bei dem die verwendeten Heizelemente keinen zeitlich stark steigenden Widerstandsverlauf zeigen und gleichzeitig aber die Nachteile des Stands der Technik vermeiden.

Die Aufgabe wird gelöst durch ein Verfahren zur Hydrierung von Siliciumtetrachlorid in einem Reaktor, bei dem Eduktgas bei einem Druck zwischen 4 und 15 bar, welches Wasserstoff und Siliciumtetrachlorid enthält, zunächst mittels mindestens einem Wärmetauscher aus Graphit und anschließend mittels mindestens einem Heizelement aus mit SiC beschichtetem Graphit auf eine Temperatur von größer als 900°C erwärmt wird und dabei die Temperatur der Heizelemente zwischen 1150°C und 1250°C beträgt, **dadurch gekennzeichnet, dass** das Eduktgas mindestens eine Borverbindung beinhaltet, ausgewählt aus der Gruppe bestehend aus Diboran, höhere Borane, Borhalogenverbindungen und Borsilylverbindungen, wobei die Summe der Konzentrationen aller Borverbindungen größer ist als 1 ppmv bezogen auf den Eduktgasstrom.

Bevorzugte Ausführungen des Verfahrens sind in den abhängigen Ansprüchen beansprucht.

Durch das erfindungsgemäße Verfahren ergeben sich überraschenderweise zwei Effekte, die zwar noch nicht in voller Tiefe verstanden wurden, aber dennoch reproduzierbar sind.

Zum einen werden die Heizelement- und damit Reaktorausfälle, die durch Abplatzungen der Heizelemente bedingt sind, drastisch reduziert. Zum anderen wird gleichzeitig der zeitliche Anstieg des Widerstandes der Heizelemente reduziert, was dazu führt, dass bei langen Laufzeiten der Reaktoren keine größeren Anforderungen an die Stromversorgung mehr gestellt werden müssen. Dies reduziert die Investitionskosten erheblich.

Wie aus dem Stand der Technik bekannt ist, können Objekte prinzipiell mit TBS unter Verwendung geeigneter Verfahren beschichtet werden, um so die Resistenz gegenüber Oxidation zu erhöhen. In den von den Erfindern durchgeführten Experimenten konnte keine TBS-Schicht auf den Heizelementen nachgewiesen werden.

Auch unter der Annahme, dass analog US 3,455,745 A eine TBS-Schicht entstünde, könnte sie nicht das zeitliche Widerstandsverhalten der Heizelemente erklären. Ein zeitliches An- und Abschalten einer Borquelle im Experiment zeigt eindeutig, dass bei eingeschalteter Borquelle der zeitliche Widerstandsverlauf deutlich flacher beobachtet werden kann, als bei anschließend ausgeschalteter Borquelle. Dieser Effekt ist sehr gut reproduzierbar und führt bei mehrmaligem An- und Abschalten der Borquelle zu einem streng monoton steigenden zeitlichen Widerstandsverlauf mit abwechselnd flachem und steilem Widerstandsverlauf. Das mögliche Entstehen einer TBS-Schicht, die bekanntermaßen schlecht oxidierbar und daher nur schwer entfernbar ist, könnte daher in keinem Fall den steilen Anstieg des Widerstandes unmittelbar nach Ausschalten der Borquelle erklären.

Bei der Hydrierung von STC wird Wasserstoff in der Regel im Überschuss (H₂:STC= 2:1 - 10:1) eingesetzt und nach Abtrennung der kondensierbaren Chlorsilane und HCl wieder im Kreislauf als Edukt zur STC-Hydrierung verwendet.

Neben Wasserstoff aus dem Recyclingschritt können auch Rein-Wasserstoff aus einem Steamreformer oder Rein-Wasserstoff aus der Poly-Abscheidung zum Einsatz kommen.

Diese Wasserstoff-Sorten weisen eine hohe Reinheit auf, beispielsweise < 10 ppmv Methan oder < 100 ppta Borverbindungen.

Im Recycling-Schritt für Wasserstoff aus der STC-Hydrierung reichern sich Methan und andere Kohlenwasserstoffe an (bis zu 5000 ppmv), während eine Anreicherung von Bor-Verbindungen nicht beobachtet wurde.
Es wurde gefunden, dass der unterschiedliche Methan-Gehalt in den verschiedenen H₂-Sorten (< 10 ppmv bzw. < 5000 ppmv) auf die Methanisierung der Graphitbauteile und Heizelemente offenbar keine messbare Auswirkung hat. Die Schädigung der Bauelemente fand im vergleichbaren Umfang stand. Der zeitliche Widerstandsverlauf der Heizelemente zeigte für die verschiedenen Wasserstoff-Sorten einen ähnlichen Verlauf.

Man kann davon ausgehen, dass sich auch bei einem hohen CH₄-Gehalt (aber unterhalb der Gleichgewicht-Zusammensetzung) keine ausreichend dichte oder zusammenhängende SiC-Schicht auf den Bauelementen ausbilden kann, die die Bauelemente vor einen weiteren Angriff des Wasserstoffs schützt oder den Widerstandsverlauf nachhaltig ändert.

Überraschend wurde jedoch gefunden, dass bereits die Zugabe einer geringen Menge Diboran (B₂H₆) ca. 1 ppmv zum Wasserstoff zu einem günstigeren Verlauf der Widerstands-Zeit-Kurve der Heizelemente führt. Gleichzeitig führt dies zu wesentlich geringeren Schädigungen der Heizelemente.

In den üblichen Verfahren zur Hydrierung von STC zu TCS wird ein Bor-Eintrag vermieden, indem man reine Edukte (STC und H₂ aus der Polyabscheidung bzw. STC und H₂ aus Recycling-Schritten) einsetzt. STC bzw. H₂ aus der Polyabscheidung ist inhärent arm an Verunreinigungen, da zum Beispiel Borverbindungen über Polysilicium abgereichert werden.

Es wurde bisher vermutet, dass ein zusätzlicher Eintrag von Bor über die Edukte der STC-Hydrierung zu einem Anstieg der Bor Konzentration im Zielprodukt führt und damit einen erheblich höheren Aufwand zur Rein-Destillation des Produktes bedingt.

Völlig überraschend hat sich aber herausgestellt, dass sich das zusätzlich eingespeiste Bor weder im flüssigen (kondensierten) Reaktionsprodukt noch im aufbereiteten Wasserstoff anreichert.

Dies konnte auch durch zeitweises Wegschalten der Bor-Quelle bestätigt werden, da nach kurzer Zeit der positive Effekt auf den Widerstandsverlauf der Heizelemente abnahm.

Bei Anreicherung von Bor im System hätte man einen länger anhaltenden Effekt erwarten müssen.

Das im Versuch zusätzlich zugeführte Bor muss also entweder im Reaktor aufgenommen werden, z.B. durch Einbau in die entstehende SiC-Schicht, oder über den H2-Recycling-Schritt anfallenden Chlorwasserstoff mit ausgeschleust werden. Ein quantitativer Nachweis hierfür ist nicht möglich. Auf den Heizelementen bildet sich eine SiC-Schicht, jedoch keine Tetraborsilicid-Schicht.

Für die erfindungsgemäße Ausführung des Verfahrens kann eine Bor-Verbindung dem Wasserstoff-Eduktstrom zugeführt werden.

Dies kann beispielsweise durch die Zuspeisung einer definierten Menge B₂H₆ oder anderer gasförmiger Bor-Verbindungen erfolgen.

Eine weitere bevorzugte erfindungsgemäße Ausführungsvariante besteht in der Einspeisung einer Bor-Verbindung in den STC Eduktstrom.

Vorzugsweise führt man eine unter den gewählten Prozessbedingungen (Temperatur und Druck) flüssige oder lösliche Bor-Verbindung dem STC-Strom zu, die dann gemeinsam mit dem Chlorsilan verdampft wird.

Es ist für das Gelingen der Erfindung unerheblich, ob die zugeführte Bor-Verbindung leichter oder schwerer flüchtig als STC ist.

Auch B-Halogen- und B-Silyl-Verbindungen, sowie die höheren Borane werden bei einer Temperatur von mehr als 600°C zersetzt und führen zu den gleichen Effekten wie Diboran.

Die Schädigung der Heizelemente kann durch die Ermittlung der elektrischen Widerstandsänderung quantifiziert werden. Durch die Methanisierungsreaktion wird offenbar der spezifische elektrische Widerstand des üblicherweise graphithaltigen Heizelementes erhöht, und damit erhöht sich auch der Gesamtwiderstand des Heizelementes. Eine Heizelementanordnung mit einzelnen regel-/steuerbaren Heizelementen und einzelnen aus elektrischem Strom und elektrischer Spannung berechenbaren elektrischen Widerständen dieser Heizelemente erwies sich hier als besonders vorteilhaft.

Diese Anordnung erlaubt eine Berechnung und Beobachtung der meist vielen einzelnen Heizelementwiderständen. Durch Beobachtung dieser Widerstände kann indirekt die Heizelementschädigung durch die Methanisierungsreaktion beobachtet werden.

### Beispiele

Die Beispiele wurden in einer Vorrichtung gemäß US 4,536,642 A durchgeführt. Es wurde ein Gasgemisch im Eduktstrom bestehend aus 33 mol% Siliciumtetrachlorid und 67 mol % Wasserstoff verwendet. Die Eintrittstemperatur des Eduktgasstroms betrug etwa 175°C. Der Druck wurde zu 6 bar und die Temperatur des Gases im Reaktorraum zu 1.000°C eingestellt.

In Experimenten wurde gezielt eine Borverbindung Diboran zum Wasserstoff zudosiert und gleichzeitig die Veränderung des Widerstandes im Vergleich zur Referenz gemessen.

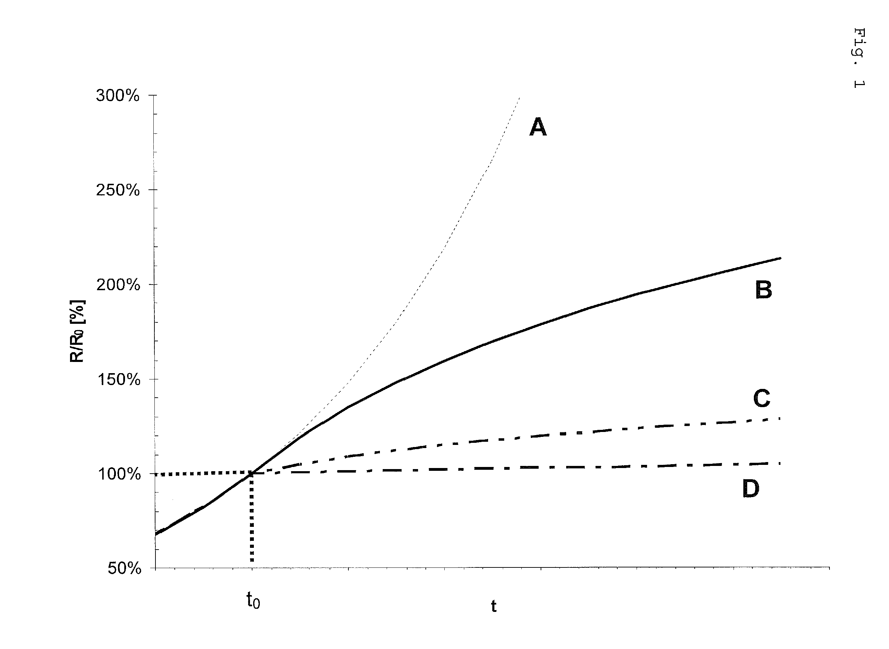

In Fig. 1 ist das Ergebnis schematisch wiedergegeben. In der Abszisse ist die Zeit t aufgetragen, während die Ordinate den relativen Widerstand R/R₀ in Prozent zeigt. Ab dem Zeitpunkt t₀ wurden für die Fälle B, C und D zusätzlich Diboran zudosiert. Der Fall A wurde als Referenzfall (Stand der Technik) betrachtet, der eine gesamte Borkonzentration von kleiner 0.5 ppmv im Gesamtvolumenstrom als Verunreinigung beinhaltet. Bei den Experimenten B (1ppmv Diboran im Gesamtvolumenstrom), C (4ppmv Diboran im Gesamtvolumenstrom), und D (5ppmv Diboran im Gesamtvolumenstrom) konnte überraschenderweise beobachtet werden, dass sich die zeitliche Änderung des Widerstandes verringerte, sobald zusätzlich Diboran zudosiert wurde. Dieser Effekt ist bereits bei Fall B erkennbar, aber besonders ausgeprägt bei Fall D.

Es wurde überraschenderweise beobachtet, dass der zeitliche Widerstandsanstieg reduziert wurde, sobald Wasserstoff mit einer Verunreinigung von Bor höher als 1 ppmv im Gesamtvolumenstrom verwendet wurde.

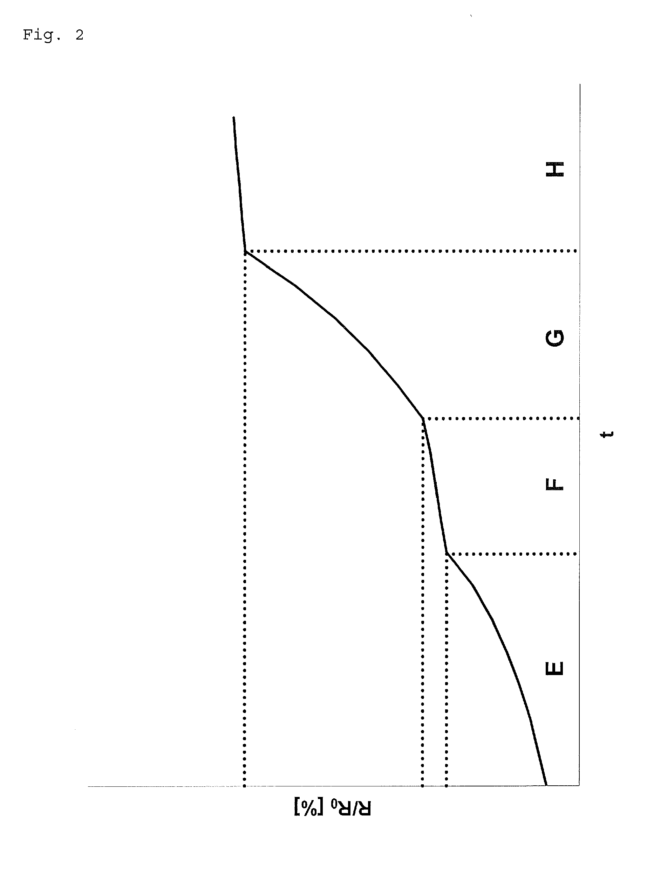

In einem weiteren Experiment wurde die Zudosierung von Diboran (4 ppmv bezogen auf den Gesamtvolumenstrom) mehrmals an- und abgeschaltet. Das Ergebnis ist schematisch in Fig. 2 wiedergegeben. In der Abszisse ist die Zeit t aufgetragen, während die Ordinate den relativen Widerstand R/R₀ zeigt. Im Zeitbereich E wurde keine Zudosierung von Diboran vorgenommen. Der Widerstandsverlauf ist erwartungsgemäß streng monoton steigend. Ab dem Zeitbereich F wurde Diboran zudosiert und die Steigung des Widerstandsverlaufes reduziert sich fast simultan mit der Zudosierung. Im Zeitbereich G wird die Zudosierung abgeschaltet, was zur Folge hat, dass der Widerstand wieder wie vorher steigt. Dabei ist keine Latenzzeit erkennbar. Der Effekt setzt unmittelbar ein. Wird die Zudosierung abermals eingeschaltet (Bereich H), reduziert sich die Steigung des Widerstandes abermals fast unmittelbar.

Der Wechsel zwischen Zudosierung und nicht-Zudosierung führt offenbar zu unmittelbaren Reaktionen des Systems in Form von verschiedenen Steigungen des relativen Widerstandes der Heizelemente. Würden zusätzliche Schichten (z.B. TBS) für die Veränderung des Widerstandsverlaufes verantwortlich sein, müsste eine deutliche Latenzzeit messbar sein, in der die entsprechenden Schichten auf- bzw. abgebaut werden würden.

In einem weiteren Experiment wurde bei gleicher Borkonzentration (4 ppmv bezogen auf den Gesamtvolumenstrom) die Temperatur der Oberfläche der Heizelemente mit der Zeit erhöht.

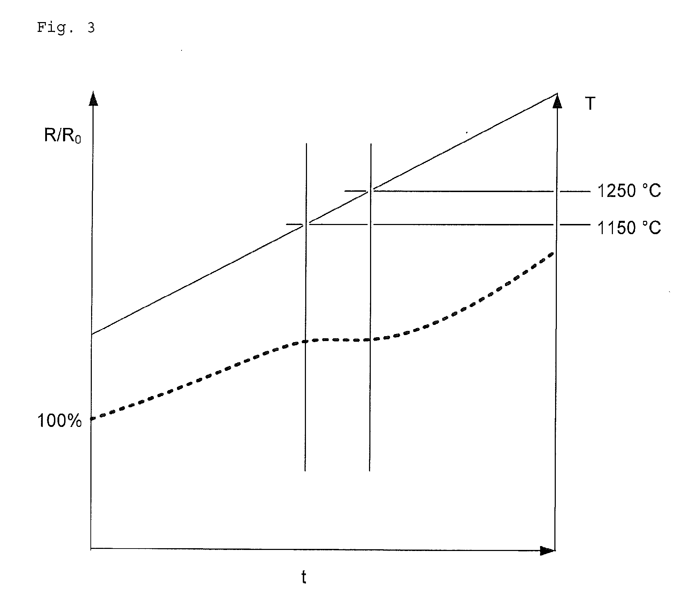

Das Ergebnis dieses Versuches ist in Fig. 3 schematisch wiedergegeben.

In der Abszisse ist die Zeit t aufgetragen, während die linke Ordinate den relativen Widerstand R/R₀ in Prozent zeigt. Die rechte Ordinate zeigt die zeitliche Veränderung der Temperatur der Heizelemente, die mittels Pyrometer gemessen werden konnte. Es konnte ermittelt werden, dass die Steigung der Widerstandskurve (gepunktete Linie) in einem Bereich zwischen 1150°C und 1250°C ein Minimum hat.

## Patentansprüche

1. Verfahren zur Hydrierung von Siliciumtetrachlorid in einem Reaktor, bei dem Eduktgas bei einem Druck zwischen 4 und 15 bar, welches Wasserstoff und Siliciumtetrachlorid enthält, zunächst mittels mindestens einem Wärmetauscher aus Graphit und anschließend mittels mindestens einem Heizelement aus mit SiC beschichtetem Graphit auf eine Temperatur von größer als 900°C erwärmt wird und dabei die Temperatur der Heizelemente zwischen 1150°C und 1250°C beträgt, **dadurch gekennzeichnet, dass** das Eduktgas mindestens eine Borverbindung beinhaltet, ausgewählt aus der Gruppe bestehend aus Diboran, höhere Borane, Borhalogenverbindungen und Borsilylverbindungen, wobei die Summe der Konzentrationen aller Borverbindungen größer ist als 1 ppmv bezogen auf den Eduktgasstrom.

2. Verfahren nach Anspruch 1, wonach im Reaktor Gegenstromwärmetauscher aus Graphit eingesetzt werden, durch die Eduktgas durch heißes Produktgas, enthaltend Trichlorsilan, HCl und nicht umgesetztes Eduktgas, erwärmt wird.

3. Verfahren nach einem der Ansprüche 1 bis 2, wonach die Borverbindung gemeinsam mit Wasserstoff in den Reaktor eingeschleust wird.

4. Verfahren nach einem der Ansprüche 1 bis 2, wonach die Borverbindung gemeinsam mit Siliciumtetrachlorid in den Reaktor eingeschleust wird.

5. Verfahren nach einem der Ansprüche 1 bis 2, wobei die Borverbindung sowohl mit Wasserstoff als auch mit Siliciumtetrachlorid in den Reaktor eingeschleust wird.

6. Verfahren nach Anspruch 3 oder nach Anspruch 5, wonach die Konzentration aller Borverbindungen im Wasserstoff mindestens 4 ppmv beträgt.

7. Verfahren nach Anspruch 4 oder nach Anspruch 5, wonach die Konzentration aller Borverbindungen im Siliciumtetrachlorid mindestens 4 ppmw beträgt.
